(19) **Europäisches Patentamt**
**European Patent Office**
**Office européen des brevets**

(11) **EP 2 567 253 B1**

(12) **EUROPEAN PATENT SPECIFICATION**

(45) Date of publication and mention
of the grant of the patent:
**23.09.2015 Bulletin 2015/39**

(51) Int Cl.:
**G01S 13/524** (2006.01)    **G01S 13/72** (2006.01)

(21) Application number: **11731044.1**

(86) International application number:
**PCT/GB2011/050849**

(22) Date of filing: **28.04.2011**

(87) International publication number:
**WO 2011/138598 (10.11.2011 Gazette 2011/45)**

(54) **TRACKER FALSE ALARM RATE CONTROL**

STEUERUNG DER FEHLALARMRATE EINES TRACKERS

CONTRÔLE DE TAUX DE FAUSSES ALERTES DE DISPOSITIF DE POURSUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2010 EP 10275049**
**04.05.2010 GB 201007375**

(43) Date of publication of application:
**13.03.2013 Bulletin 2013/11**

(73) Proprietor: **BAE Systems PLC**
**London SW1Y 5AD (GB)**

(72) Inventors:
• **SMITH, Daniel, Edmund**
**Isle of Wight**
**Hampshire PO31 8PF (GB)**
• **NURSE, Frank**
**Isle of Wight**
**Hampshire PO31 8PF (GB)**

(74) Representative: **BAE SYSTEMS plc**
**Group IP Department**
**Farnborough Aerospace Centre**
**Farnborough**
**Hampshire GU14 6YU (GB)**

(56) References cited:
**EP-A1- 1 712 931     WO-A1-2009/027718**
**US-B2- 7 646 329**

• **MUSICKI D ET AL: "Clutter Map and Target
Tracking", INFORMATION FUSION, 2005 7TH
INTERNATIONAL CONFERENCE ON
PHILADELPHIA, PA, USA 25-28 JULY 2005,
PISCATAWAY, NJ, USA,IEEE LNKD- DOI:
10.1109/ICIF.2005.1591838, vol. 1, 25 July 2005
(2005-07-25), pages 69-76, XP010892636, ISBN:
978-0-7803-9286-1**
• **SHAN TAO ET AL: "Performance analysis of
multidimensional clutter map CFAR", SIGNAL
PROCESSING, 2004. PROCEEDINGS. ICSP '04.
2004 7TH INTERNATIONAL CONFERENCE ON
BEIJING, CHINA AUG. 31 - SEPT 4, 2004,
PISCATAWAY, NJ, USA,IEEE, PISCATAWAY, NJ,
USA LNKD- DOI:10.1109/ICOSP.2004.1442196,
vol. 3, 31 August 2004 (2004-08-31), pages
2128-2131, XP010810846, ISBN:
978-0-7803-8406-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method of reducing false alarms. Specifically, the present invention relates to reducing the number of false alarms reported as tracks by a radar tracker.

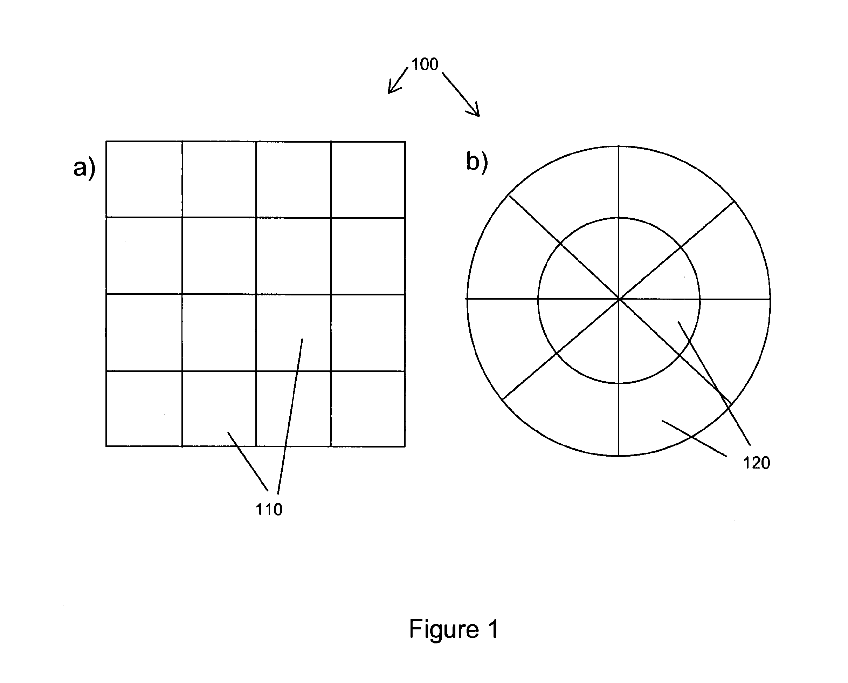

In radar trackers, there is a need to discriminate between the detection of genuine objects and detections which do not correspond to such objects, the latter are referred to as false alarms. Some areas generate more false alarms than other areas e.g. due to differences in topography or sea state. Such spatial variation in false alarms causes problems for conventional false alarm rate control methods currently implemented in radar apparatus. One such method uses a regular pattern of cells to represent the area under surveillance and thereby generate a clutter map 100. Clutter maps of this type are illustrated in Figures 1. In Figure 1a a number of uniformly sized and evenly distributed cells 110 are provided in which detections of apparent targets or "plots" are recorded. In Figure 1b the cells 120 are non-uniform but represent a regular pattern.

Such clutter maps function effectively if the distribution of regions of different densities of false alarms is comparable to the size of the cells 110, 120 of the respective map 100. The density of a region that is much smaller than the cell size will be averaged out over the entire cell 110, 120. If, this region represents a high density of false alarms and the radar tunes its performance to accommodate the averaged false alarm density or "clutter density", then the represented density will be too small for the densely populated region but too high for the remainder of the cell.

The clutter maps 100 function effectively if borders of the populated regions substantially correspond to borders of the cells. However, when a cell border passes through a densely populated region, the density of the region is underestimated at the cell border. In practice, a practical cell size is determined for a clutter map 100. The resolution of the map ought to be sufficient to capture the distribution of the clutter, however, the resolution cannot be too high or the computational requirements of the implementing system become too intense.

In determining the probability of any particular detection representing a genuine target or a false alarm, it is necessary to take account of the clutter present in the vicinity of the apparent target. Once a clutter density distribution is determined, the probability of clutter being present can also be determined. If this probability is regarded as high then it follows that clutter is present, if the probability is regarded as low, it follows that the detection represents a target. Consequently, it is important to establish a comprehensive, reliable estimate of the clutter density distribution present in the locale.

It is, therefore, desirable to provide a method of detecting false alarms avoiding some of the aforementioned limitations associated with conventional clutter maps.

The present invention provides a method of reducing false alarms issued by a radar installation, the method comprising the steps of; establishing a clutter map corresponding to a surveillance area; populating the clutter map with plots derived from plot data returned from the radar installation over a number of looks; identifying an apparent target; generating one or more cells in the clutter map dependent on the location of the plot data contained in the clutter map and a channel filter occupied by the apparent target and introducing a course regular grid of cells to the clutter map; calculating a clutter density associated with the, or each, cell; and determining a status of the apparent target dependent on the, or each, clutter density, characterised in that the method further comprises the steps of: monitoring a clutter density associated with each cell as calculated in the calculating step; and dividing any cell into two or more sub-cells when the clutter density of the respective cell reaches, or exceeds, a threshold value, to thereby refine the grid in areas having a dense population of clutter.

By using a cell distribution and cell size and position that varies in dependence on the location of plot data present in the surveillance area together with the channel occupied by the apparent target, a dynamic, adaptive method is provided. This method of reducing false alarms in the detection of targets is, therefore, able to optimise the computational burden the system dedicates to computing an accurate clutter estimate. By providing such a dynamic adaptive method, the cell size and position for a particular clutter distribution is optimal and hence more accurate determination of probability of clutter and false alarms can be undertaken. By removing design assumptions relating to presence and location of clutter and hence minimising uncertainty in the clutter estimate, improved tracking performance can be achieved.

The generating step may comprise the steps of: introducing a cell boundary at the location of the apparent target; and increasing the radius of the cell boundary until a given number of plots are encompassed thereby. Thus an efficient assessment of a clutter estimate is achieved which automatically scales with the size of the clutter object.

The method may comprise a step of applying an order statistic to a parameter associated with each of the plots. In this way the method performs translation of the measurement of the radius of a cell boundary into a clutter density measured in plots per square radian. The parameter may be derived and calculated from the plot data contained in the clutter map. The parameter to which the order statistic is applied may be one of the group of range and area covered by the plots. The order statistic applied may be one of the group of mean, median and maximum of the parameter associated with each of the plots.

The generating step comprises the step of introducing a coarse, regular grid of cells to the map and the method further comprise the steps of monitoring a clutter density associated with each cell as calculated in the calculating step; and dividing any cell into two or more sub-cells when the clutter density of the respective cell reaches, or exceeds, a threshold value, to thereby refine the grid in areas having a dense population of clutter. By introducing a coarse grid of cells in this way an efficient adjustable grid and cell size can be generated and used for clutter estimation.

The generating step may comprise the step of recombining the sub-cells when the cumulative clutter density in the sub-cells falls below the threshold value to thereby coarsen the grid as the density of clutter decreases. Thus the storage capacity and memory requirement of the radar installation and equipment can be reduced and managed.

The number of plots derived from plot data returned from the radar installation over a number of looks may be the number of plots returned over the last 20 to 100, preferably 30 to 60 looks at that position.

The method may comprise a step of using the status of the apparent target dependent on the, or each, clutter density to schedule a look. The number of looks stored may be in the range from 5 to 100, preferably in the range 5 to 25.

The aforementioned method of reducing false alarms may be provided in a radar apparatus.

Specific embodiments of the invention will now be described, by way of example only and with reference to the accompanying drawings that have like reference numerals, wherein:-

Figure 1 represents simple, known clutter maps having fixed sized cells presented in a regular pattern;

Figure 2 is a diagram of an example clutter map in the fast channel as per the specific embodiment of the present invention; and

Figure 3 is a diagram of an example clutter map in the slow channel as per the specific embodiment of the present invention.

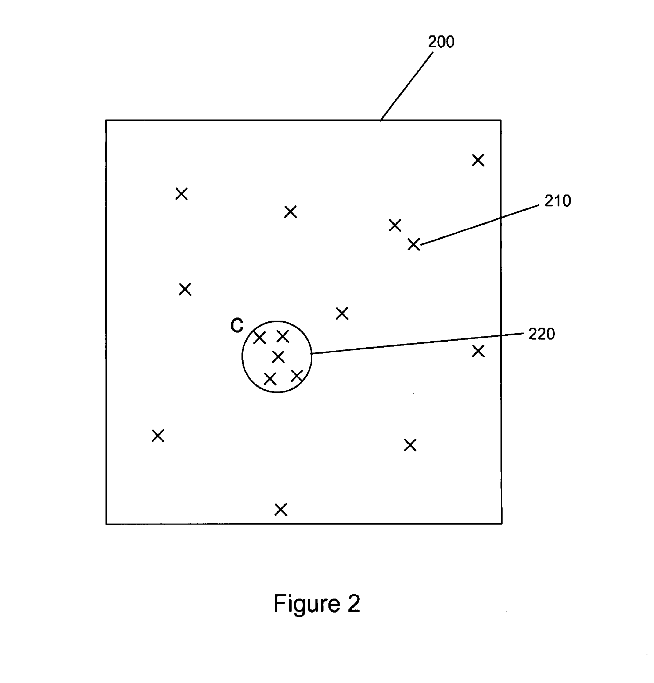

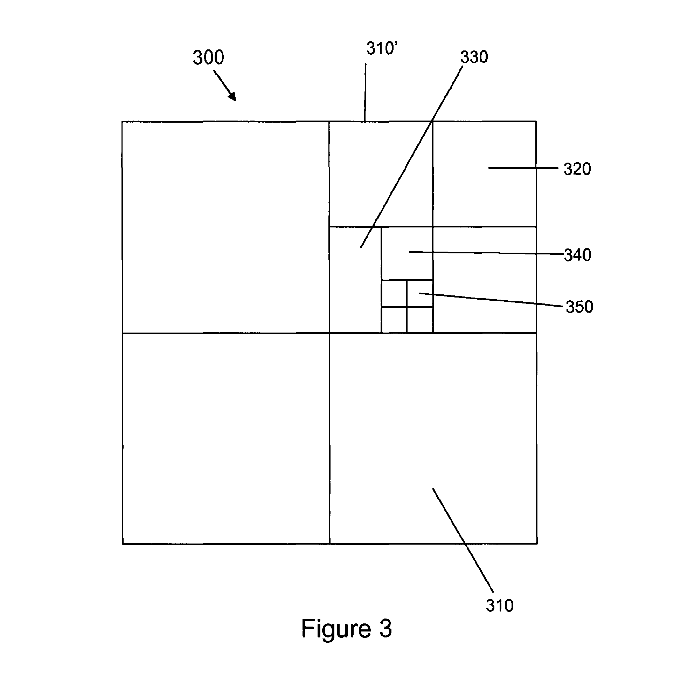

The specific embodiment of the present invention will now be described with reference to Figures 2 and 3.

The specific embodiment of the present invention uses two types of false alarm rate control. A first type is directed towards targets detected in a fast channel, i.e. targets travelling at higher than a threshold range rate, potentially experiencing a very dispersed clutter field. The second type is directed towards targets detected in a slow channel, i.e. targets travelling at lower than a threshold range rate, experiencing a more intense clutter field.

The method used for targets detected in the fast channel is a clutter mapping technique illustrated in Figure 2. A clutter map 200 represents a particular area under surveillance by a radar installation. Detections are made over a fixed time period and plots 210, representing each of these detections, are stored on the clutter map 200. The technique uses a continuously variable sized cell 220 centred on a particular location corresponding to a potential or apparent target.

When an estimate of the clutter level at a particular location is required, data relating to the N plots closest to the required location are collected by forming a circular cell boundary C about the location in question. The cell boundary C is gradually expanded until N plots 210 are contained there within. Data, preferably range data, relating to these plots 210 are then extracted and an "order statistic" or "statistical function" (such as mean, median or maximum distance from the centre of C) is applied to the data of the N plots closest to the required position. The output of the statistical function is then used to mathematically derive the clutter density within the region, represented by the cell 220.

In a first embodiment, the selected order statistic is the mean and the data relating to the plots 210 is the range data. The clutter density is, therefore, represented by the following relationship:-

$$density = \frac{(4N+3)R}{9\pi n x^2}$$

where,

N - number of plots
R - range of centre of the cell from the radar installation
n - number of looks by the radar in the time period
x - mean distance of the closest N plots from centre of cell

In this example, plots have been collected over the surveillance area 200 for a number of consecutive looks of the radar. In this embodiment 20 consecutive looks (Typically 20 looks) .The number of plots N to be used for the estimation of clutter level is 50. The region in question is centred on a point 50km from the radar installation and the mean range of these plots from the centre of the region is 1 km.

Consequently the clutter density in this example is:-

$$\frac{(4 \cdot 50 + 3)50000}{9\pi \cdot 20 \cdot 1000^2} = 17.9 \rightarrow 0.018 \text{ plots per radian per look}$$

A fast moving target may represent a possible significant threat needing to be declared to an operator as quickly as possible. Consequently, the determination of clutter density and probability needs to be accurate. Accurate and reliable threat detection is desired with the occurrences of the declaration of false targets kept to a minimum as false target declaration can be distracting and unhelpful to an operator. It is, therefore, desirable to use a high resolution clutter map to make such a determination. Fast moving targets cover a greater distance in a short amount of time and use of a high resolution clutter map to monitor such an increased area can be computationally expensive. A dynamic technique that uses a single variable sized cell, limited clutter plots and is centred on a chosen location, optimises the computational requirements of this clutter detection task.

Further, this technique obviates storage of clutter plots in fixed sized cells and avoids boundary problems at cell edges. By using a variable cell size in authenticating fast channel targets a clear indication of the level of clutter in the vicinity of any fast moving, apparent target can be determined even when there is a particularly sparse distribution of clutter plots.

Whilst the cell boundary illustrated is circular, and this represents a simple, computationally efficient cell boundary, other configurations of cell are envisaged. Other configurations of cell are envisaged, for example, polar cells with azimuth elevation and range extent may better match the cell shape from geological features such as mountains and coastlines. The order statistic chosen, need not be the mean of the range data, but may alternatively be a maximum distance or a parameter relating to the area of the cell.

The technique of the first embodiment may be used in a slow channel, however, as an increased number of clutter plots 210 are likely to be generated when detecting an apparent target in the slow channel (due to other 'slow' clutter objects), the computational expense of the first embodiment may prove to be too burdensome and may require around 20 scans of plots.

A second embodiment, comprises a more efficient method used for targets detected in the slow channel. A surveillance area covered by a radar installation is illustrated in Figure 3. The surveillance area corresponds to a clutter map 300 and is, initially, divided into a small number of large area cells 310. The clutter density in each cell 310 is determined from the emergence of clutter plots over time using a simple filter. The clutter density in each respective cell 310 is monitored. If the clutter density in a particular cell 310' rises above a predetermined threshold, the cell 310' is divided into two or more sub-cells 320.

The clutter density in each respective cell 310, 320 continues to be monitored. If the clutter density of a particular sub-cell 320' rises above the predetermined threshold, the sub-cell 320' is divided into two or more sub-cells 330. Subsequently, further sub-division may be undertaken as illustrated to yield smaller cells (e.g. 340, 350). This technique results in a clutter map 300 having many cells 340, 350 in the regions of dense clutter but few cells 310 in the regions of low clutter. Consequently, the memory usage and processing time requirements for generating the clutter map 300 are minimised.

In a preferred embodiment, divided cells continue to be monitored and, if the cumulative clutter density in two comparable, adjacent sub-cells falls below a lower threshold, the cells are re-combined into a single cell, preferably into a cell that was previously a single entity but potentially by generating a new, larger cell from comparable adjacent sub-cells. The clutter map 300 is, therefore, fully adaptive over time. An example of a slow channel clutter map 300 is shown in Figure 3.

Each embodiment results in a comprehensive clutter map 200, 300 being generated. Each clutter map 200, 300 is indicative of the clutter density distribution in the vicinity of the potential target, detected by the radar installation. The clutter map 200, 300 is then used to establish the probability of clutter being present in the vicinity of a detection and, thus, the probability of the detection representing a genuine target or a false alarm can be determined.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of reducing false alarms issued by a radar installation, the method comprising the steps of:-

    establishing a clutter map corresponding to a surveillance area;

populating the clutter map with plots derived from plot data returned from the radar installation over a number of looks;

identifying an apparent target;

generating one or more cells in the clutter map dependent on the location of the plot data contained in the clutter map and a channel ccupied by the apparent target and introducing a coarse regular grid of cells to the clutter map;

calculating a clutter density associated with the, or each, cell; and

determining a status of the apparent target dependent on the, or each, clutter density, **characterised in that** the method further comprises the steps of:

monitoring a clutter density associated with each cell as calculated in the calculating step; and

dividing any cell into two or more sub-cells when the clutter density of the respective cell reaches, or exceeds, a threshold value, to thereby refine the grid in areas having a dense population of clutter.

2. A method according to Claim 1, wherein the generating step comprises the steps of:

introducing a cell boundary at the location of the apparent target; and

increasing the radius of the cell boundary until a given number of plots are encompassed thereby.

3. A method according to Claim 2, comprising a step of applying an order statistic to a parameter associated with each of the plots.

4. A method according to Claim 3, wherein the parameter is derived and calculated from the plot data contained in the clutter map.

5. A method according to Claim 3 or Claim 4, wherein the parameter to which the order statistic is applied is one of the group of range and area covered by the plots.

6. A method according to any of Claims 3 to 5, wherein the order statistic is one of the group of mean, median and maximum of the parameter associated with each of the plots.

7. A method according to any preceding claim, wherein sub-cells are recombined when the cumulative clutter density in the sub-cells falls below the threshold value to thereby coarsen the grid as the density of clutter decreases.

8. A method according to any preceding claim, wherein the number of plots derived from plot data returned from the radar installation over a number of looks is the number of plots returned over the last 20 to 100, preferably 30 to 60 looks at that position.

9. A method according to any preceding claim, comprising a step of using the status of the apparent target dependent on the, or each, clutter density to schedule a look.

10. A method according to Claim 9, wherein the number of looks stored is in the range from 5 to 100, preferably in the range 5 to 25.

11. A radar apparatus operable to perform the method of any of Claims 1 to 10.

**Patentansprüche**

1. Verfahren zum Verringern von Fehlalarmen, die ein Radargerät ausgibt, wobei das Verfahren die folgenden Schritte umfasst:

Erstellen einer Festzeichenkarte, die einem Überwachungsgebiet entspricht;

Belegen der Festzeichenkarte mit Aufzeichnungen, die von Aufzeichnungsdaten, die von dem Radargerät über eine Anzahl von Blicken zurückgeführt werden, abgeleitet werden;

Identifizieren eines erkennbaren Zieles;

Erzeugen einer oder mehrerer Zellen in der Festzeichenkarte in Abhängigkeit von den Orten der Aufzeichnungsdaten, die in der Festzeichenkarte enthalten sind, und eines Kanals, der von dem erkennbaren Ziel besetzt ist, und Einführen eines groben regelmäßigen Rasters von Zellen in die Festzeichenkarte;

Berechnen einer Festzeichendichte, die der oder jeder Zelle zugeordnet ist;
Bestimmen eines Status des erkennbaren Zieles in Abhängigkeit von der oder jeder Festzeichendichte, **dadurch gekennzeichnet, dass** das Verfahren die folgenden Schritte umfasst:

Überwachen einer Festzeichendichte, die jeder Zelle zugeordnet ist und die in dem Rechenschritt berechnet wurde;
Unterteilen einer Zelle in zwei oder mehr Unterzellen wenn die Festzeichendichte der entsprechenden Zelle einen Schwellenwert erreicht oder überschreitet, um dadurch das Raster in Gebieten mit einer dichten Festzeichenbelegung zu verfeinern.

2. Verfahren nach Anspruch 1, wobei der Erzeugungsschritt die folgenden Schritte umfasst:

Einführen einer Zellenbegrenzung am Ort des erkennbaren Zieles; und
Erhöhung des Radius der Zellenbegrenzung, bis diese eine gegebene Anzahl von Aufzeichnungen umschließt.

3. Verfahren nach Anspruch 2, das einen Schritt umfasst, bei dem eine Ordnungsstatistik auf einen Parameter, der jeder der Aufzeichnungen zugeordnet ist, angewendet wird.

4. Verfahren nach Anspruch 3, wobei der Parameter aus den Aufzeichnungsdaten, die in der Festzeichenkarte enthalten sind, abgeleitet und berechnet wird.

5. Verfahren nach Anspruch 3 oder 4, wobei der Parameter, auf den die Ordnungsstatistik angewendet wird, einer der Gruppe aus Bereich und Gebiet, die von den Aufzeichnungen abgedeckt werden, ist.

6. Verfahren nach einem der Ansprüche 3 bis 5, wobei die Ordnungsstatistik eine der Gruppe aus Mittelwert, Median und Maximum des Parameters, der jedem der Aufzeichnungen zugeordnet ist, ist.

7. Verfahren nach einem der vorhergehenden Ansprüche, wobei Unterzellen rekombiniert werden, wenn die kumulative Festzeichendichte in den Unterzellen den Schwellenwert unterschreitet, um dadurch das Raster zu vergröbern, wenn die Dichte der Festzeichen abnimmt.

8. Verfahren nach einem der vorhergehenden Ansprüche, wobei die Anzahl der Aufzeichnungen, die aus den Aufzeichnungsdaten, die von dem Radargerät über eine Anzahl von Blicken zurückgeführt werden, abgeleitet werden, die Anzahl der Aufzeichnungen ist, die über die letzten 20 bis 100, vorzugsweise 30 bis 60, Blicke auf die Position zurückgeführt werden.

9. Verfahren nach einem der vorhergehenden Ansprüche, das einen Schritt umfasst, bei dem der Status des erkennbaren Ziels in Abhängigkeit von der oder jeder Festzeichendichte verwendet wird, um einen Blick zeitlich zu planen.

10. Verfahren nach Anspruch 9, wobei die Anzahl gespeicherter Blicke in dem Bereich von 5 bis 100, vorzugsweise in dem Bereich von 5 bis 25, liegt.

11. Radarvorrichtung, die betreibbar ist, um das Verfahren nach einem der Ansprüche 1 bis 10 auszuführen.

**Revendications**

1. Procédé de réduction des fausses alarmes délivrées par une installation radar, le procédé comprenant les étapes consistant à :

établir une carte de fouillis correspondant à une zone de surveillance ;
peupler la carte de fouillis par des tracés déduits de données de tracé renvoyées par l'installation radar relativement à un certain nombre de visées ;
identifier une cible apparente ;
générer une ou plusieurs cellules dans la carte de fouillis en fonction de l'emplacement des données de tracé contenues dans la carte de fouillis et d'un canal occupé par la cible apparente et introduire une grille régulière grossière de cellules dans la carte de fouillis ;
calculer une densité de fouillis associée à la ou à chaque cellule ; et

déterminer un état de la cible apparente en fonction de la ou de chaque densité de fouillis, le procédé étant **caractérisé en ce qu'**il comprend en outre les étapes consistant à :

surveiller une densité de fouillis associée à chaque cellule ainsi calculée à l'étape consistant à calculer ; et diviser toute cellule en au moins deux sous-cellules si la densité de fouillis de la cellule respective atteint ou dépasse une valeur de seuil, de manière à affiner la grille dans des zones présentant une population dense de fouillis.

**2.** Procédé selon la revendication 1, dans lequel l'étape consistant à générer comprend les étapes consistant à :

introduire une frontière de cellule à l'emplacement de la cible apparente ; et augmenter le rayon de la frontière de cellule jusqu'à ce que celle-ci englobe un nombre donné de tracés.

**3.** Procédé selon la revendication 2, comprenant l'étape consistant à appliquer une statistique d'ordre à un paramètre associé à chacun des tracés.

**4.** Procédé selon la revendication 3, dans lequel le paramètre est déduit et calculé à partir des données de tracé contenues dans la carte de fouillis.

**5.** Procédé selon la revendication 3 ou la revendication 4, dans lequel le paramètre auquel la statistique d'ordre est appliquée est un élément dans le groupe constitué par une portée et une superficie couverte par les tracés.

**6.** Procédé selon l'une quelconque des revendications 3 à 5, dans lequel la statistique d'ordre est un élément dans le groupe constitué par la valeur moyenne, la valeur médiane et la valeur maximale du paramètre associé à chacun des tracés.

**7.** Procédé selon l'une quelconque des revendications précédentes, dans lequel des sous-cellules sont recombinées si la densité de fouillis cumulée dans les sous-cellules passe sous la valeur de seuil, de minière à rendre la grille plus grossière à mesure que la densité de fouillis diminue.

**8.** Procédé selon l'une quelconque des revendications précédentes, dans lequel le nombre de tracés déduits des données de tracé renvoyées par l'installation radar relativement à un certain nombre de visées est le nombre de tracés renvoyés relativement aux 20 à 100 dernières visées, de préférence aux 30 à 60 dernières visées, en cette position.

**9.** Procédé selon l'une quelconque des revendications précédentes, comprenant l'étape consistant à utiliser l'état de la cible apparente fonction de la ou de chaque densité de fouillis pour programmer une visée.

**10.** Procédé selon la revendication 9, dans lequel le nombre de visées enregistré est compris entre 5 et 100, de préférence entre 5 et 25.

**11.** Appareil radar apte à mettre en oeuvre le procédé selon l'une quelconque des revendications 1 à 10.

100

a)

b)

120

110

Figure 1

Figure 2

EP 2 567 253 B1

Figure 3